(19) **Europäisches Patentamt**

**European Patent Office**

**Office européen des brevets**

(11) **EP 4 574 894 A1**

(12) **EUROPEAN PATENT APPLICATION**

(43) Date of publication:
**25.06.2025 Bulletin 2025/26**

(21) Application number: **23220193.9**

(22) Date of filing: **22.12.2023**

(51) International Patent Classification (IPC):
**C08L 23/06** (2006.01)     **C08L 23/08** (2025.01)
**C08F 2/00** (2006.01)     **C08F 110/02** (2006.01)
**F16L 9/12** (2006.01)

(52) Cooperative Patent Classification (CPC):
(C-Sets available)
**C08L 23/06; F16L 9/12;** C08L 2203/18;
C08L 2205/025; C08L 2207/062     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Abu Dhabi Polymers Co. Ltd (Borouge) - Sole
Proprietorship L.L.C.
Abu Dhabi (AE)**

• **Borealis AG
1020 Vienna (AT)**

(72) Inventors:
• **BURYAK, Andrey
Abu Dhabi (AE)**
• **KUMAR, Ashish
Abu Dhabi (AE)**

(74) Representative: **Maiwald GmbH
Elisenhof
Elisenstraße 3
80335 München (DE)**

(54) **POLYETHYLENE PIPE WITH IMPROVED HIGH TEMPERATURE HYDROSTATIC PRESSURE
PERFORMANCE**

(57)     The present invention is directed to base resin (B) comprising a polyethylene composition (PC), said polyethylene composition (PC) comprising a first ethylene polymer (B1) and a second ethylene polymer (B2) having a higher weight molecular weight than the first ethylene polymer (B1). Further, the present invention is directed to a pipe comprising said base resin (B).

**EP 4 574 894 A1**

(52) Cooperative Patent Classification (CPC): (Cont.)

C-Sets
**C08F 210/16, C08F 2/001;**
**C08F 210/16, C08F 4/6491;**
**C08F 210/16, C08F 4/6546;**
**C08L 23/06, C08L 23/0815;**
**C08L 23/06, C08L 23/0815, C08K 3/04;**
C08F 210/16, C08F 210/14, C08F 2500/05,
C08F 2500/07, C08F 2500/12, C08F 2500/27

**Description**

The present invention is directed to base resin (B) comprising a polyethylene composition (PC), said polyethylene composition (PC) comprising a first ethylene polymer (B1) and a second ethylene polymer (B2) having a higher weight molecular weight than the first ethylene polymer (B 1). Further, the present invention is directed to a pipe comprising said base resin (B).

Polyethylene pipes are widely used for the transportation of water and gas due to various advantages compared to other materials like iron, concrete or fiber reinforced plastic. The main advantages of plastic pipes are that they are corrosion free and flexible, along with good mechanical strength. Polyethylene pipes are normally used in the temperature range of 0 °C to 50 °C. The use of these plastic pipes in hot climatic conditions above 20 °C requires derating of pipes in accordance with ISO 13761. Derating also leads to thicker pipes in order to withstand said operating conditions. Therefore, in order to reduce the thickness and the material consumption, polyethylene with higher Minimum Required Strength (MRS) at 20 °C is desired.

The properties of polyethylene resins, namely mechanical strength and good long term strength (stress crack resistance), are opposing properties and therefore the preparation of products having high MRS and good mechanical strength poses a challenge.

Therefore, the recent PE100+ grade development has focused on improving the short term and long term property balance. The short term properties are measured by hydrostatic pressure testing (HPT) of pipes at 20 °C and 80 °C at various stress levels. Also long term stress crack resistance is measured in pipes by hydrostatic testing of notched pipes. Similarly, accelerated test to measure stress crack resistance are established like strain hardening test to evaluate the long term resistance of the pipe resins.

To ensure that HDPE meets PE100 qualification, several quality control tests are performed on pipes produced from their resins. Most often notched pipe test is used as measure of stress crack resistance. In addition, short term pressure resistance is measured at 80 °C using hydrostatic pressure tests. To qualify as PE100 or PE100RC, minimum number of hours before pipes failures needs to be reached in both tests. Unfortunately, results of these tests are inversely proportional to each other. For example if the comonomer content in polymer is increased (meaning that density is decreased), the result of notched pipe test will improve at the expense of HPT results. If an opposite change to the polymer is made, i.e. the comonomer content is reduced which means that the density is increased, the result of notched pipe test will deteriorate while HPT results will improve.

It is therefore necessary that a balance between the results of both tests is achieved while still meeting the PE100 or PE100RC requirement. While it is possible to design the polymer in such a way that both requirements are met the production window for such polymers is narrow.

Therefore, it is an object of the present invention to provide a polyethylene composition suitable for the preparation of a pipe fulfilling the PE100 or PE100RC requirement while the results of the notched pipe test (NPT) and hydrostatic pressure test (HPT) both remain on a high level.

Accordingly, the present invention is directed to a base resin (B), comprising

i) 30.0 to 70.0 wt.-% of a first ethylene polymer (B 1) being an ethylene homopolymer or a copolymer of ethylene and a $C_3$-$C_8$ $\alpha$-olefin, and
ii) 30.0 to 70.0 wt.-% of second ethylene polymer (B2) being a copolymer of ethylene and a $C_3$-$C_8$ $\alpha$-olefin having a lower density than the first copolymer (B 1),

based on the overall weight of the base resin (B).

According to one embodiment of the present invention,

i) the overall amount of $C_3$-$C_8$ $\alpha$-olefin monomeric units C within the base resin (B) is in the range of 0. 1 to 0.7 mol-%, and/or
ii) the base resin (B) fulfils in-equation (I)

$$MWD - 45.7 \le -35.5 \times C \qquad (I),$$

wherein MWD is the molecular weight distribution (Mw/Mn) of the base resin (B) and C is the overall amount of $C_3$-$C_8$ $\alpha$-olefin monomeric units within the base resin (B) in [mol-%].

According to another embodiment of the present invention, the base resin (B) has an amount of hexane solubles, determined according to the method given in the measuring methods, less than or equal to 1.30 wt.-%, based on the overall weight of the base resin (B).

According to a further embodiment of the present invention, the first ethylene polymer (B1) has a density determined according to ISO 1183-1:2004 in the range of 960 to 980 $kg/m^3$, and/or the base resin (B) has a molecular weight distribution (Mw/Mn) less than or equal to 29.4.

According to still another embodiment of the present invention, the first ethylene polymer (B1) is an ethylene homopolymer and the second copolymer (B2) is a copolymer of ethylene and 1-hexene.

According to one embodiment of the present invention, the base resin (B) is obtained in the presence of a Ziegler-Natta catalyst (ZN) obtained by a process comprising the steps of reacting a support, at least the surface of which comprises a magnesium halide compound having the formula (1):

$$(RO)_{2-n}MgX_n \qquad (1)$$

wherein R is a $C_1$-$C_{20}$ alkyl or a $C_7$-$C_{26}$ aralkyl, each same or different X is a halogen, and n is an integer 1 or 2,

an alkyl metal halide compound having the formula (2):

$$R^1_{n1}M_{m1}X^1_{(3m1-n1)} \qquad (2)$$

wherein M is B or Al, each same or different, $R^1$ is a $C_1$-$C_{10}$ alkyl, each same or different. $X^1$ is a halogen, n1 is 1 or 2 when m1 is 1 and n1 is an integer from 1 to 5 when m1 is 2,

a magnesium composition containing magnesium bonded to a hydrocarbyl and magnesium bonded to a hydrocarbyl oxide, said magnesium composition having the empirical formula (3):

$$R^2_{n2}(R^3O)_{2-n2}Mg \qquad (3)$$

wherein each same or different $R^2$ is a $C_1$-$C_{20}$ alkyl, each same or different, $R^3$ is a $C_1$-$C_{20}$ alkyl or a $C_1$-$C_{20}$ alkyl containing a hetero element, and n2 is between 0.01 and 1.99,

and a titanium halide compound having the formula (4):

$$(R^4O)_{n3}TiX^2_{4-n3} \qquad (4)$$

wherein each same or different $R^4$ is a $C_1$-$C_{20}$ alkyl, each same or different $X^2$ is a halogen, n3 is 0 or an integer 1-3, and Ti is quadrivalent titanium.

The present invention is further directed to a polyethylene composition (PC), comprising

a) at least 90 wt.-%, based on the total weight of the polyethylene composition (PC), of the base resin (B) as described above,
b) a pigment (P), and
c) optionally additives (AD).

According to one embodiment of the present invention, the polyethylene composition (PC) has

i) a density determined according to ISO 1183-1:2004 in the range of 957 to 965 $kg/m^3$, and
ii) a flow rate ratio $FRR_{21/5} = MFR_{21}/MFR_5$ in the range of 27 to 36, wherein $MFR_5$ is the melt flow rate determined according to ISO 1133 at a temperature of 190 °C and a load of 5.0 kg and $MFR_2$, is the melt flow rate determined according to ISO 1133 at a temperature of 190 °C and a load of 21.6 kg.

According to another embodiment of the present invention, the pigment (P) is selected from the group consisting of carbon black, molybdenum orange and cadmium orange.

According to a further embodiment of the present invention, the polyethylene composition (PC) has a melt flow rate $MFR_5$ (5.0 kg, 190 °C) determined according to ISO 1133 below 2.0 g/10 min.

According to a further embodiment of the present invention, the polyethylene composition (PC) has a melt flow

rate MFR$_{21}$ (21.6 kg, 190 °C) determined according to ISO 1133 in the range of 0.5 to 12.0 g/10 min.

According to another embodiment of the present invention, the polyethylene composition (PC) has a strain hardening modulus in the range of 50.0 to 85.0 MPa.

The present invention is also directed to a pipe, comprising at least 90 wt.-% of the polyethylene composition (PC) as described above.

According to one embodiment of the present invention, the pipe fulfills in-equation (II) and/or in-equation (III)

$$(II) \qquad \log(HPT_{5.9}) \geq -0.0539 \times SH + 5.795$$

$$(III) \qquad \log(HPT_{5.7}) \geq -0.1747 \times SH + 14.799,$$

wherein HPT$_{5.9}$ is the hydrostatic pressure test value of the pipe in [h] determined at a pressure of 5.9 MPa and a temperature of 80 °C, HPT$_{5.7}$ is the hydrostatic pressure test value of the pipe in [h] determined at a pressure of 5.7 MPa and a temperature of 80 °C, and SH is the strain hardening modulus in [MPa] of the polyethylene composition (PC).

According to a further embodiment of the present invention, the pipe is a fluid pipe, preferably an oil or water pipe.

It is especially preferred that the pipe is a pressure pipe.

The present invention is further directed to a process for preparing a pipe as describe above, comprising the steps of

a) preparing the base resin (B) in a sequential process comprising at least two reactors, wherein

i) ethylene and optionally a C$_3$-C$_8$ α-olefin are polymerized in a first reactor (R1), thereby obtaining the first ethylene polymer (B1) fulfilling in-equation (IV)

$$(IV) \qquad \frac{H_2/C_2(R1)}{MFR_2(R1)} \leq 3.5$$

wherein H$_2$/C$_2$(R1) is the molar ratio of hydrogen and ethylene in [mol/kmol] in the first reactor (R1) and MFR$_2$(R1) is the melt flow rate MFR$_2$ (2.16 kg, 190 °C) determined according to ISO 1133 of the first ethylene polymer (B1) obtained in the first reactor (R1),
ii) transferring the first ethylene polymer (B1) obtained in the first reactor (R1) into a second reactor (R2),
iii) polymerizing ethylene and a C$_3$-C$_8$ α-olefin in the second reactor (R2) in the presence of the first ethylene polymer (B1), thereby obtaining the second ethylene polymer (B2), wherein the first ethylene polymer (B1) and the second ethylene polymer (B2) together form the base resin (B) fulfilling in-equation (V)

$$(V) \qquad \frac{H_2/C_2(R2)}{MFR_5(R2)} \leq 50.0$$

wherein H$_2$/C$_2$(R2) is the molar ratio of hydrogen and ethylene in [mol/kmol] in the second reactor (R2) and MFR$_5$ (R2) is the melt flow rate MFR$_5$ (5.0 kg, 190 °C) determined according to ISO 1133 of the base resin (B),

b) blending the base resin with the pigment (P) and optionally additives (AD), thereby obtaining the polyethylene composition (PC), and
c) extruding the polyethylene composition (PC) through a suitable die, thereby obtaining the pipe.

In the following, the present invention is described in more detail.

The base resin (B)

As outlined above, the present invention is directed to a base resin (B) of polyethylene suitable for the preparation of high pressure pipes.

The base resin (B) comprises 30.0 to 70.0 wt.-% of a first ethylene polymer (B1) being an ethylene homopolymer or a copolymer of ethylene and a C$_3$-C$_8$ α-olefin and 30.0 to 70.0 wt.-% of second ethylene polymer (B2) being a copolymer of ethylene and a C$_3$-C$_8$ α-olefin having a lower density than the first copolymer (B1), based on the overall weight of the base resin (B).

Preferably, the base resin (B) comprises 40.0 to 60.0 wt.-%, more preferably 42.0 to 58.0 wt.-%, still more preferably 44.0 to 56.0 wt.-%, like 47.0 to 53.0 wt.-% of the first ethylene polymer (B1) and 40.0 to 60.0 wt.-%, more preferably 42.0 to 58.0 wt.-%, still more preferably 44.0 to 56.0 wt.-%, like 47.0 to 53.0 wt.-% of the second ethylene polymer (B2), based on the overall weight of the base resin (B).

Further, it is preferred that the first ethylene polymer (B1) has a lower molecular weight than the second ethylene polymer (B2). Accordingly, it is preferred that the first ethylene polymer (B1) has a higher melt flow rate $MFR_2$ (190 °C, 2.16 kg) determined according to ISO 1133 than the second ethylene polymer (B2). Additionally, it is preferred that the first ethylene polymer (B1) has a higher melt flow rate $MFR_{21}$ (190 °C, 21.6 kg) determined according to ISO 1133 than the second ethylene polymer (B2).

The first ethylene polymer (B1) can be an ethylene homopolymer or an ethylene copolymer and the second ethylene polymer (B2) is an ethylene copolymer.

An 'ethylene homopolymer' denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

A polymer is denoted 'ethylene copolymer' if the polymer is derived from ethylene monomer units and at least one alpha-olefin comonomer. The alpha-olefin conomoner preferably is selected from alpha-olefin conomoners with 3 to 8 carbon atoms, more preferably 4 to 8 carbon atoms. Suitable alpha-olefin comonomer species are 1-butene, 1-hexene, 4-methyl-1-pentene, 1-octene or their mixtures. Preferred are 1-butene and 1-hexene. Most preferred is 1-hexene.

It is preferred that the overall amount of $C_3$-$C_8$ $\alpha$-olefin monomeric units within the base resin (B) is in the range of 0.1 to 0.7 mol-%, more preferably in the range of 0.2 to 0.6 mol-%, still more preferably in the range of 0.3 to 0.5 mol-%.

In case both the first ethylene polymer (B 1) and the second ethylene polymer (B2) are ethylene copolymers, the comonomer can be the same of different. Thus, the first ethylene polymer (B 1) and the second ethylene polymer (B2) may independently contain comonomers selected from alpha-olefin comonomers with 3 to 8 carbon atoms, more preferably 4 to 8 carbon atoms. Suitable alpha-olefin comonomer species are 1-butene, 1-hexene, 4-methyl-1-pentene, 1-octene or their mixtures. Preferred are 1-butene and 1-hexene. Most preferred is 1-hexene. Preferably, the first ethylene polymer (B 1) and the second ethylene polymer (B2) contain the same comonomer. Thus, it is preferred that the first ethylene polymer (B 1) and the second ethylene polymer (B2) contain a comonomer selected from alpha-olefin comonomers with 3 to 8 carbon atoms, more preferably 4 to 8 carbon atoms. Suitable alpha-olefin comonomer species are 1-butene, 1-hexene, 4-methyl-1-pentene, 1-octene or their mixtures. Preferred are 1-butene and 1-hexene. Most preferably, the first ethylene polymer (B1) and the second ethylene polymer (B2) are copolymers of ethylene and 1-hexene.

However, it is preferred that the first ethylene polymer (B1) is an ethylene homopolymer.

Further, it is preferred that the first ethylene polymer (B1) has a density determined according to ISO 1183-1:2004 in the range of 960 to 980 kg/m$^3$, more preferably in the range of 965 to 976 kg/m$^3$, still more preferably in the range of 968 to 975 kg/m$^3$, like in the range of 970 to 974 kg/m$^3$.

The melt flow rate $MFR_2$ (190 °C, 2.16 kg) determined according to ISO 1133 of the first ethylene polymer (B1) is preferably in the range of 100 to 350 g/10 min, more preferably in the range of 120 to 330 g/10 min, still more preferably in the range of 130 to 320 g/10 min, like in the range of 150 to 316 g/10 min.

The second ethylene polymer (B2) is an ethylene copolymer.

In particular, the second ethylene polymer (B2) is a copolymer of ethylene and a $C_3$-$C_8$ $\alpha$-olefin. More preferably, the second ethylene polymer (B2) is a copolymer of ethylene and a $C_4$-$C_6$ $\alpha$-olefin. Still more preferably, the second ethylene polymer (B2) is a copolymer of ethylene and 1-butene or 1-hexene. It is especially preferred that the second ethylene polymer (B2) is a copolymer of ethylene and 1-hexene.

Preferably, the second ethylene polymer (B2) has a density determined according to ISO 1183-1:2004 in the range of 940 to 955 kg/m$^3$, more preferably in the range of 943 to 953 kg/m$^3$, still more preferably in the range of 945 to 952 kg/m$^3$, like in the range of 949 to 951 kg/m$^3$.

The molecular weight distribution (Mw/Mn) of the base resin (B) is preferably less than or equal to 29.4, more preferably in the range of 19.0 to 29.2, more preferably in the range of 22.0 to 29.0.

Additionally or alternatively to the previous paragraph, it is preferred that the base resin (B) fulfils in-equation (I), more preferably in-equation (Ia), still more preferably in-equation (Ib)

$$MWD - 45.7 \leq -35.5 \times C \qquad (I),$$

$$MWD - 41.4 \leq -28.4 \times C \qquad (Ia),$$

$$MWD - 38.2 \leq -24.8 \times C \qquad (Ib)$$

wherein MWD is the molecular weight distribution (Mw/Mn) of the base resin (B) and C is the overall amount of $C_3$-$C_8$ $\alpha$-olefin monomeric units within the base resin (B) in [mol-%].

Further, it is preferred that the base resin (B) has an amount of hexane solubles determined according to the method given in the measuring methods, less than or equal to 1.30 wt.-%, more preferably less than or equal to 1.20 wt.-%, still more preferably less than or equal to 1.18 wt.-% based on the overall weight of the base resin (B).

The base resin (B) is preferably prepared in a multistage process in the presence of a Ziegler-Natta catalyst. The process is described in more detail below.

The polyethylene composition (PC)

The present invention is further directed to a polyethylene composition (PC) comprising at least 90.0 wt.-% of the base resin (B) as described above and a pigment (P).

Accordingly, the term 'base resin' denotes the polymeric part of the polyethylene composition (PC) without pigments such as carbon black. A person skilled in the art will understand that the measurements as to the base resin require the presence of stabilizers. The base resin according to the present invention denotes a polymer derived from at least 50 mol-% ethylene monomer units and additional comonomer units.

In addition to the base resin, usual additives (AD) for utilization with polyolefins, such as stabilizers (e.g. antioxidant agents), antacids and/or anti-UV's, antistatic agents and utilization agents (such as processing aid agents) may be present in the polyethylene composition. Preferably, the amount of these additives is 10 wt.-% or below, more preferably 8 wt.-% or below, most preferably 5 wt.-% or below, based on the overall weight of the polyethylene composition (PC).

Preferably, the polyethylene composition (PC) comprises pigments (P) in an amount of 8 wt.-% or below, more preferably in an amount of 1 to 4 wt.-%, of the total composition.

It is preferred that the pigment (P) is selected from the group consisting of carbon black, molybdenum orange and cadmium orange.

It is understood that the content of additives includes any carrier polymers used to introduce the additives or the pigment (if present) to the polyethylene composition (PC), i.e. masterbatch carrier polymers. An example of such a carrier polymer would be a high-density polyethylene in the form of powder.

Further preferred, the amount of additives different from pigments (P) and masterbatch carrier polymers is 1 wt.-% or less, more preferably 0.5 wt.-% or less.

Preferably, the polyethylene composition (PC) according to the present invention has a melt flow rate $MFR_5$ (190 °C, 5.0 kg) determined according to ISO 1133 below 2.0 g/10 min, more preferably below 1.5 g/10 min, still more preferably below 1.0 g/10 min, like in the range of 0.1 to 0.4 g/10 min.

Additionally or alternatively to the previous paragraph, it is preferred that the polyethylene composition (PC) has a melt flow rate $MFR_{21}$ (190 °C, 21.6 kg) determined according to ISO 1133 in the range of 0.5 to 12.0 g/10 min, more preferably in the range of 2.0 to 10.0 g/10 min, still more preferably in the range of 3.5 to 9.0 g/10 min, like in the range of 4.5 to 8.2 g/10 min.

Accordingly, it is preferred that the polyethylene composition (PC) has a flow rate ratio $FRR_{21/5}$, being the ratio of $MFR_2$, to $MFR_5$ in the range of 20.0 to 40.0, more preferably in the range of 23.0 to 38.0, still more preferably in the range of 28.0 to 36.0, like in the range of 30.0 to 35.0.

Preferably, the polyethylene composition (PC) has a density determined according to ISO 1183-1:2004 has a density in the range of 950 to 965 kg/m³, more preferably in the range of 955 to 964 kg/m³, still more preferably in the range of 957 to 963 kg/m³, like in the range of 959 to 963 kg/m³.

The polyethylene composition (PC) according to the present invention is further characterized by its strain hardening behavior. Preferably, the polyethylene composition (PC) has a strain hardening modulus in the range of 50.0 to 85.0 MPa, more preferably in the range of 52.0 to 83.0 MPa, still more preferably in the range of 54.0 to 81.0 MPa, like in the range of 56.0 to 80.0 MPa.

The pipe

The present invention is directed to a pipe comprising the polyethylene composition (PC) as described above.

According to the invention, the pipe fulfils in-equation (I) and/or in-equation (II)

$$\text{(I)} \qquad \log(HPT_{5.9}) \geq -0.0539 * SH + 5.795$$

$$\text{(II)} \qquad \log(HPT_{5.7}) \geq -0.1747 * SH + 14.799,$$

wherein $HPT_{5.9}$ is the hydrostatic pressure test value of the pipe in [h] determined at a pressure of 5.9 MPa and a temperature of 80 °C, $HPT_{5.7}$ is the hydrostatic pressure test value of the pipe in [h] determined at a pressure of 5.7 MPa and a temperature of 80 °C, and SH is the strain hardening modulus in [MPa] of the polyethylene composition (PC).

Preferably, the hydrostatic pressure test value $HPT_{5.9}$ determined at a pressure of 5.9 MPa and a temperature of 80 °C of the pipe at least 200 h, more preferably in the range of 200 to 6000 h, still more preferably in the range of 400 to 5500 h, like in the range of 500 to 5100 h.

Additionally or alternatively to the previous paragraph, it is preferred that hydrostatic pressure test value $HPT_{5.7}$ determined at a pressure of 5.7 MPa and a temperature of 80 °C of the pipe is at least 1000 h, more preferably in the range of 1000 to 6100 h, still more preferably in the range of 1500 to 5800 h, like in the range of 2000 to 4700 h.

Further, it is preferred that the notched pipe test value NPT determined at a pressure of 4.6 MPa and a temperature of 80 °C of the pipe is at least 800 h, more preferably in the range of 800 to 7000 h, still more preferably in the range of 1000 to 6800 h, like in the range of 1100 to 6500 h.

It is preferred that the pipe according to the invention comprises at least 90.0 wt.-%, more preferably at least 95.0 wt.-%, still more preferably 98 wt.-%, like 99.0 wt.-% of the polyethylene composition (PC) described above. It is especially preferred that the pipe according to the invention consists of the polyethylene composition (PC) described above.

Preferably, the pipe according to the invention is a fluid pipe. In particular, it is preferred that the pipe is an oil or water pipe.

Additionally, it is preferred that the pipe is a pressure pipe.

The process

The present invention is further directed to a process for preparing the pipe as defined above, comprising the steps of

a) preparing the base resin (B) in a sequential process comprising at least two reactors, wherein

i) ethylene and optionally a $C_3$-$C_8$ α-olefin are polymerized in a first reactor (R1), thereby obtaining the first ethylene polymer (B1) fulfilling in-equation (IV)

$$(IV) \quad \frac{H_2/C_2(R1)}{MFR_2(R1)} \leq 3.5$$

wherein $H_2/C_2(R1)$ is the molar ratio of hydrogen and ethylene in [mol/kmol] in the first reactor (R1) and $MFR_2(R1)$ is the melt flow rate $MFR_2$ (2.16 kg, 190 °C) determined according to ISO 1133 of the first ethylene polymer (B1) obtained in the first reactor (R1),

ii) transferring the first ethylene polymer (B1) obtained in the first reactor (R1) into a second reactor (R2),

iii) polymerizing ethylene and a $C_3$-$C_8$ α-olefin in the second reactor (R2) in the presence of the first ethylene polymer (B1), thereby obtaining the second ethylene polymer (B2), wherein the first ethylene polymer (B1) and the second ethylene polymer (B2) together form the base resin (B) fulfilling in-equation (IV)

$$(V) \quad \frac{H_2/C_2(R2)}{MFR_5(R2)} \leq 50.0$$

wherein $H_2/C_2(R2)$ is the molar ratio of hydrogen and ethylene in [mol/kmol] in the second reactor (R2) and $MFR_5$ (R2) is the melt flow rate $MFR_5$ (5.0 kg, 190 °C) determined according to ISO 1133 of the base resin (B),

b) blending the base resin with the pigment (P) and optionally additives (AD), thereby obtaining the polyethylene composition (PC), and

c) extruding the polyethylene composition (PC) through a suitable die, thereby obtaining the pipe.

According to step a) of the process, the base resin (B) is prepared in a sequential process comprising at least two reactors.

In particular, the inventive base resin (B) is preferably produced by polymerizing respectively copolymerizing ethylene in a reactor cascade formed by at least a first reactor (R1) and at least a second reactor (R2), whereby preferably the first reactor (R1) is a slurry reactor (SR) and the second reactor (R2) is a gas phase reactor (GPR).

In the following the multistage process is described.

The first polymerization stage takes place in the first reactor (R1). The first reactor (R1) is preferably a first slurry phase reactor (SR) and more preferably a first loop reactor (LR). Such reactors include a continuous stirred tank reactor and a loop reactor. It is especially preferred to conduct the polymerization in a loop reactor. In such reactors the slurry is circulated with a high velocity along a closed pipe by using a circulation pump. Loop reactors are generally known in the art and examples are given, for instance, in US-A-4,582,816, US-A-3,405,109, US-A-3,324,093, EP-A-479 186 and US-A-5,391,654.

The temperature in the first reactor (R1) is typically from 50 to 115 °C, preferably from 60 to 110 °C and in particular from 70 to 100 °C. The pressure is typically from 1 to 150 bar, preferably from 1 to 100 bar.

It is sometimes advantageous to conduct the first loop polymerization above the critical temperature and pressure of the fluid mixture. Such operations are described in US-A-5,391,654. In such an operation, the temperature is typically at least 85 °C, preferably at least 90 °C. Furthermore the temperature is typically not higher than 110°C, preferably not higher than 105°C. The pressure under these conditions is typically at least 40 bar, preferably at least 50 bar. Furthermore, the pressure is typically not higher than 150 bar, preferably not higher than 100 bar. In a preferred embodiment, the first and/or second polymerization stage, is carried out under supercritical conditions whereby the reaction temperature and reaction pressure are above equivalent critical points of the mixture formed by hydrocarbon medium, monomer, hydrogen and optional comonomer and the polymerization temperature is lower than the melting temperature of the polymer formed.

It is preferred that the temperature of the reaction in the first and second reactor differs by not more than 10 %, preferably from 0 % to 9 %.

Moreover, it is preferred that the pressure of the reaction in the first and second reactor differs by not more than 15 %, preferably from 0 % to 13 %. Preferably, the pressure in the first reactor (R1) is higher than in the second reactor (R2).

In the first reactor (R1) a first intermediate material comprising, preferably consisting of the first ethylene polymer (B1), optionally together with a pre-polymer fraction, is obtained. The first intermediate material is obtained by polymerizing ethylene in the first reactor (R1), optionally in the presence of the pre-polymer fraction, thereby obtaining the first ethylene polymer (B1).

The first intermediate material comprising, preferably consisting of the first ethylene polymer (B1), optionally together with a pre-polymer fraction, has a melt flow rate $MFR_2$ (190 °C, 2.16 kg) determined according to ISO 1133 in the range of 100 to 350 g/10 min, more preferably in the range of 120 to 330 g/10 min, still more preferably in the range of 130 to 320 g/10 min, like in the range of 150 to 316 g/10 min.

For adjusting the $MFR_2$ of the first intermediate material preferably hydrogen is introduced into the first reactor (R1) for polymerizing ethylene in order to obtain the first ethylene polymer (B1). The hydrogen feed is preferably adjusted to the ethylene feed in order to fulfill a hydrogen to ethylene ratio in the first reactor (R1) of 300 to 700 mol/kmol, more preferably of 400 to 650 mol/kmol, most preferably 470 to 630 mol/kmol.

In particular, ethylene is polymerized in a first reactor (R1), thereby obtaining the first ethylene polymer (B1) fulfilling in-equation (IV)

$$(IV) \quad \frac{H_2/C_2(R1)}{MFR_2(R1)} \leq 3.5$$

wherein $H_2/C_2(R1)$ is the molar ratio of hydrogen and ethylene in [mol/kmol] in the first reactor (R1) and $MFR_2(R1)$ is the melt flow rate $MFR_2$ (2.16 kg, 190 °C) determined according to ISO 1133 of the first ethylene polymer (B1) obtained in the first reactor (R1).

The first ethylene polymer (B1) produced in the first reactor (R1) can be an ethylene homo- or copolymer fraction. It is preferred that the first ethylene polymer (B1) is an ethylene homopolymer.

However, if polymerizing a copolymer, comonomers preferably are selected from the group comprising 1-butenel 1-hexenel 4-methyl-1-pentene, 1-octene or their mixtures, especially preferred is 1-hexene. In a preferred embodiment in the first reactor (R1), an ethylene homopolymer is polymerized so that no comonomer is fed to this first polymerization stage.

The residence time and the polymerization temperature in the first reactor (R1) are adjusted as such as to polymerize ethylene and optionally a comonomer in order to obtain an ethylene homo- or copolymer being the first ethylene polymer (B1) typically in an amount of 40 to 60 wt.-%, preferably 45 to 50 wt.-% of the total base resin.

Furthermore, the first ethylene polymer (B1) in the process is as defined as above for the base resin (B) of the present invention.

The first intermediate material comprising preferably consisting of the first ethylene polymer (B1), optionally together with a pre-polymer fraction, obtained in the first reactor (R1) is subsequently transferred to the second reactor (R2).

The slurry may be withdrawn from the first reactor (R1) either continuously or intermittently. The slurry withdrawn from the first polymerization comprises the first intermediate material.

A preferred way of intermittent withdrawal is the use of settling legs where the slurry is allowed to concentrate before withdrawing a batch of the concentrated slurry from the reactor. The use of settling legs is disclosed, amongst others, in US-A-3,374,211, US-A-3,242,150 and EP-A-1 310 295. Continuous withdrawal is disclosed, amongst others, in EP-A-891 990, EP-A-1 415 999, EP-A-1 591 460 and WO-A-2007/025640. The continuous withdrawal is advantageously combined with a suitable concentration method as disclosed in EP-A-1 415 999 and EP-A-1 591 460.

Settling legs are used to concentrate the slurry that is withdrawn from the reactor. The withdrawn stream thus contains more polymer per volume than the slurry within the reactor in average. This has the benefit that less liquid needs to be recycled back to the reactor and thereby the costs of the equipment are lower. In commercial scale plants, the fluid which is withdrawn with the polymer evaporates in a flash vessel and from there it is compressed with a compressor and recycled into the slurry phase reactor.

However, the settling legs withdraw the polymer intermittently. This causes the pressure and also other variables in the reactor to fluctuate with the period of the withdrawal. Also the withdrawal capacity is limited and depends on the size and number of settling legs. To overcome these disadvantages, continuous withdrawal is often preferred.

The continuous withdrawal, on the other hand, has the problem that it typically withdraws the polymer in the same concentration as it is present within the reactor. To reduce the amount of hydrocarbons to be compressed, the continuous outlet is advantageously combined with a suitable concentration device, such as a hydrocyclone or sieve, as disclosed in EP-A-1 415 999 and EP-A-1 591 460. The polymer-rich stream is then directed to a flash, flash vessel, and the polymer-lean stream is returned directly into the reactor.

The first intermediate material comprising, preferably consisting of the first ethylene polymer (B1), optionally together with a pre-polymer fraction, obtained in the first reactor (R1) is transferred for a purging step into a flash vessel and then to a second reactor (R2). In the flash vessel the hydrocarbons were substantially removed from the polymer. Optionally, but less preferred, the first intermediate is directly transferred to the second reactor (R2).

The second polymerization stage takes place in the second reactor (R2). The second reactor (R2) is gas phase reactor (GPR), more preferably a fluidized bed gas phase reactor.

In a fluidized bed gas phase reactor, an olefin is polymerized in the presence of a polymerization catalyst in an upwards moving gas stream. The reactor typically contains a fluidized bed comprising the growing polymer particles containing the active catalyst located above a fluidization grid. The polymer bed is fluidized with the help of a fluidization gas comprising the olefin monomer, eventually comonomer(s), eventually chain growth controllers or chain transfer agents, such as hydrogen, and eventually inert gas. The inert gas can thereby be the same or different as the inert gas used in the slurry phase reactor. The fluidization gas is introduced into an inlet chamber at the bottom of the reactor. To make sure that the gas flow is uniformly distributed over the cross-sectional surface area of the inlet chamber, the inlet pipe may be equipped with a flow dividing element as known in the art, e. g. US-A-4,933,149 and EP-A-684 871.

From the inlet chamber the gas flow is passed upwards through the fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087261.

Other types of fluidization grids are disclosed, amongst others, in US-A-4,578,879, EP 600 414 and EP-A-721 798. An overview is given in Geldart and Bayens: The Design of Distributors for Gas-fluidised Beds, Powder Technology, Vol. 42, 1985.

The fluidization gas passes through the fluidized bed. The superficial velocity of the fluidization gas must be higher than the minimum fluidization velocity of the particles contained in the fluidized bed, as otherwise no fluidization would occur. On the other hand, the velocity of the gas should be lower than the onset velocity of the pneumatic transport, as otherwise the whole bed would be entrained with the fluidization gas. The minimum fluidization velocity and the onset velocity of the pneumatic transport can be calculated when the particle characteristics are known by using common engineering practice. An overview is given, amongst others, in Geldart: Gas Fluidisation Technology, J. Wiley & Sons, 1996.

When the fluidization gas is contacted with the bed containing the active catalyst the reactive components of the gas, such as monomers and chain transfer agents, react in the presence of the catalyst to produce the polymer product. At the same time, the gas is heated by the reaction heat.

The unreacted fluidization gas is then removed from the top of the reactor, compressed and recycled into the inlet chamber of the reactor. Prior to the entry into the reactor, fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

After that, the gas is cooled in a heat exchanger to remove the reaction heat. The gas is cooled to a temperature which is lower than that of the bed to prevent the bed from being heated because of the reaction. It is possible to cool the gas to a temperature where a part of it condenses. When the liquid droplets enter the reaction zone they are vaporized. The vaporization heat then contributes to the removal of the reaction heat. This kind of operation is called condensed mode and variations of it are disclosed, amongst others, in WO-A-2007/025640, US-A-4,543,399, EP-A-699 213, and WO-A-94/25495. It is also possible to add condensing agents into the recycle gas stream, as disclosed in EP-A-696 293.

The condensing agents are non-polymerizable components, such as propane, n-pentane, isopentane, n-butane or isobutane, which are at least partially condensed in the cooler.

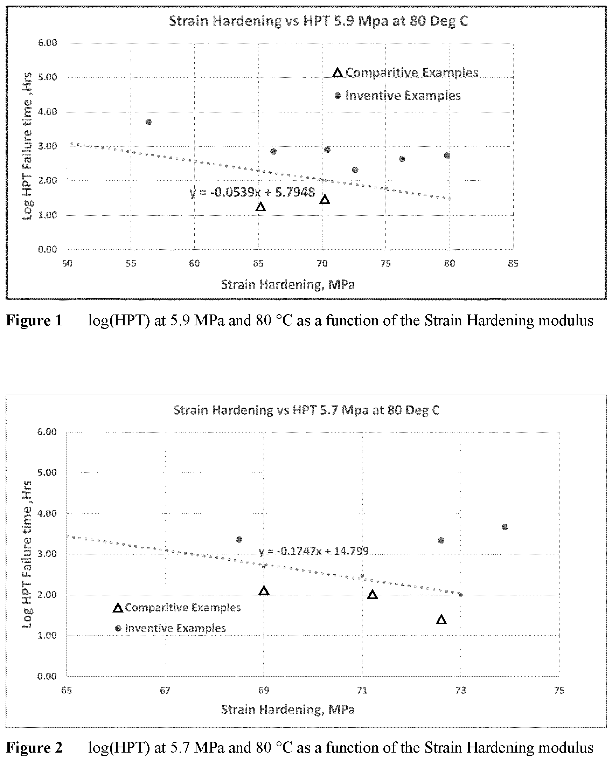

The polymeric product may be withdrawn from the gas phase reactor either continuously or intermittently. The polymeric product withdrawn from the gas phase reactor of the third polymerization stage is the base resin as shown in Fig. 1. Combinations of these methods may also be used. Continuous withdrawal is disclosed, amongst others, in WO-A-00/29452. Intermittent withdrawal is disclosed, amongst others, in US-A-4,621,952, EP-A-188 125, EP-A-250 169 and EP-A-579 426.

The top part of the at least one gas phase reactor may include a so called disengagement zone. In such a zone, the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed levels.

Also antistatic agent(s) may be introduced into the at least one gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes and alcohols.

The reactor may include a mechanical agitator to further facilitate mixing within the fluidized bed. An example of suitable agitator design is given in EP-A-707 513.

In the second reactor (R2) the base resin comprising, preferably consisting of the first ethylene polymer (B1) and the second ethylene polymer (B2), optionally together with a pre-polymer fraction, is obtained. The base resin is obtained by polymerization of the second ethylene polymer (B2) in the presence of the first ethylene polymer (B1), optionally together with a pre-polymer fraction.

The temperature in the gas phase reactor typically is at least 70 °C, preferably at least 80 °C. The temperature typically is not more than 105 °C, preferably not more than 95 °C. The pressure is typically at least 10 bar, preferably at least 15 bar but typically not more than 30 bar, preferably not more than 25 bar.

The base resin is obtained by polymerizing in the second reactor (R2) ethylene and a $C_3$-$C_8$ α-olefin, preferably 1-butene or 1-hexene, more preferably 1-hexene, in the presence of the first ethylene polymer (B1), optionally together with a pre-polymer fraction.

The base resin comprising, preferably consisting of the first ethylene polymer (B1) and the second ethylene polymer (B2), optionally together with a pre-polymer fraction, has preferably a lower melt flow rate $MFR_2$ (190 °C, 2.16 kg) determined according to ISO 1133 than the first ethylene polymer (B1).

For adjusting the $MFR_2$ of the base resin preferably hydrogen is introduced into the second reactor (R2) for polymerizing ethylene and a $C_3$-$C_8$ α-olefin, preferably 1-butene or 1-hexene, more preferably 1-hexene, thereby obtaining the second ethylene polymer (B2) in the presence of the first ethylene polymer (B1) optionally together with a pre-polymer fraction. The hydrogen feed is preferably adjusted to the ethylene feed in order to fulfill a hydrogen to ethylene ratio in the second reactor (R2) of 0.5 to 10 mol/kmol, more preferably of 1.0 to 9.0 mol/kmol, most preferably 2.0 to 8.0 mol/kmol.

In particular, ethylene and a $C_3$-$C_8$ α-olefin are polymerzed in the second reactor (R2) in the presence of the first ethylene polymer (B1), thereby obtaining the second ethylene polymer (B2), wherein the first ethylene polymer (B1) and the second ethylene polymer (B2) together form the polyethylene composition (PC) fulfilling in-equation (IV)

$$(IV) \quad \frac{H_2/C_2(R2)}{MFR_5(R2)} \leq 50.0$$

wherein $H_2/C_2$(R2) is the molar ratio of hydrogen and ethylene in [mol/kmol] in the second reactor (R2) and $MFR_5$(R2) is the melt flow rate $MFR_5$ (5.0 kg, 190 °C) determined according to ISO 1133 of the polyethylene composition (PC).

The comonomer feed is preferably adjusted to the ethylene feed in order to fulfil a comonomer to ethylene ratio in the range of 20 to 100 mol/kmol, more preferably in the range of 30 to 80 mol/kmol, most preferably in the range of 40 to 75 mol/kmol.

Furthermore, the polymer fraction obtained in the second reactor (R2) corresponds to the second ethylene polymer (B2) as defined above.

The residence time and the polymerization temperature in the second reactor (R2) are adjusted as such as to polymerize ethylene and a $C_3$-$C_8$ α-olefin, preferably 1-butene or 1-hexene, more preferably 1-hexene in order to obtain the second ethylene polymer (B2) typically in an amount of 40 to 60 wt.-%, preferably 45 to 50 wt.-% of the total base resin.

Further, the final polyethylene base resin emerging from the gas phase reactor, comprising, preferably consisting the first ethylene polymer (B1) and the second ethylene polymer (B2), optionally together with a pre-polymer fraction, has a density of more than 940 kg/m3 and equal or less than 960.0 kg/m$^3$, preferably of more than 943 kg/m$^3$ and equal to or less than 956 kg/m$^3$, more preferably of more than 945 kg/m$^3$ and equal to or less than 950 kg/m$^3$ and most preferably of more than 946 kg/m$^3$ and equal to or less than 950 kg/m$^3$ determined according to ISO 1183-1:2004.

In case a pre-polymer fraction is present, the base resin comprises a pre-polymer fraction, which adds to the amount of the first ethylene polymer (B1). The pre-polymer fraction preferably is present in the base resin in an amount of up to 7.5 wt.-%, more preferably in an amount of up to 5 wt.-% and most preferably in an amount of up to 3 wt.-% of the total base resin. The pre-polymer fraction preferably is an ethylene homopolymer.

Furthermore, the base resin in the process is as defined as above for the polyethylene composition of the present invention.

Optionally the process may further comprise a pre-polymerization stage which precedes the first polymerization stage. The purpose of the pre-polymerization stage is to polymerize a small amount of polymer onto the catalyst at a low temperature and/or a low monomer concentration. By pre-polymerization it is possible to improve the performance of the catalyst in slurry and/or modify the properties of the final polymer.

The pre-polymerization is conducted in a pre-polymerization reactor. The pre-polymerization reactor is preferably a pre-polymerization slurry phase reactor or pre-polymerization gas phase reactor. More preferably the pre-polymerization reactor is a pre-polymerization slurry phase reactor and most preferably a pre-polymerization loop reactor.

The pre-polymerization is preferably conducted in an inert diluent, typically a hydrocarbon diluent such as methane, ethane, propane, n-butane, isobutene, pentanes, hexanes, heptanes, octanes etc., or their mixtures. Preferably the diluent is a low boiling hydrocarbon having from 1 to 4 carbon atoms or a mixture of such hydrocarbons. The most preferred diluent is propane.

The temperature in the pre-polymerization stage is typically from 0 °C to 90 °C., preferably from 20 °C to 80 °C, more preferably from 40 °C to 70 °C. The pressure is not critical and is typically from 1 bar to 150 bar, preferably from 10 bar to 100 bar.

The amount of monomer is typically such that from 0.1 grams to 1000 grams of monomer per one gram solid catalyst component is polymerized in the pre-polymerization stage. As the person skilled in the art knows, the catalyst particles recovered from a continuous pre-polymerization reactor do not all contain the same amount of pre-polymer. Instead, each particle has its own characteristic amount which depends on the residence time of that particle in the pre-polymerization reactor. As some particles remain in the reactor for a relatively long time and some for a relatively short time, then also the amount of pre-polymer on different particles is different and some individual particles may contain an amount of pre-polymer which is outside the above limits. However, the average amount of pre-polymer on the catalyst typically is within the limits specified above.

In addition to ethylene monomer it is possible to use one or more alpha-olefin comonomers in the pre-polymerization stage if desired. Suitable comonomers are, for example, 1-butene, 1-hexene, 4-methyl-1-pentene, 1-octene and their mixtures. It is however preferred that in the pre-polymerization stage an ethylene homopolymer prepolymer fraction is polymerized.

The molecular weight of the pre-polymer may be controlled by hydrogen as it is known in the art. Further, antistatic additives may be used to prevent the particles from adhering to each other or the walls of the reactor, as disclosed in WO-A-96/19503 and WO-A-96/32420. The pre-polymer fraction, obtained in the pre-polymerization reactor is transferred to the first reactor (R1).

The catalyst system according to the present invention, i.e. the catalyst and the cocatalyst according to the present invention, is preferably fed to the first polymerization reactor.

However, where the solid catalyst component and the cocatalyst can be fed separately, it is possible that only a part of cocatalyst is introduced into the first polymerization stage and the remaining part into the subsequent polymerization stages. Also in such cases it is necessary to introduce as much cocatalyst into the first polymerization stage as necessary to obtain a sufficient polymerization reaction.

In case a pre-polymerization stage is in use the catalyst components are preferably all introduced to the pre-polymerization stage. However, where the solid catalyst component and the cocatalyst can be fed separately, it is possible that only a part of cocatalyst is introduced into the pre-polymerization stage and the remaining part into the subsequent polymerization stages. Also in such cases it is necessary to introduce as much cocatalyst into the pre-polymerization stage as necessary to obtain a sufficient polymerization reaction.

The catalyst may be transferred into the polymerization zone by any means known in the art. It is thus possible to suspend the catalyst in a diluent and maintain it as homogeneous slurry. Especially preferred is to use oil having a viscosity from 20 to 1500 mPa s as diluent, as disclosed in WO-A-2006/063771. It is also possible to mix the catalyst with a viscous mixture of grease and oil and feed the resultant paste into the polymerization zone. Still further, it is possible to let the catalyst settle and introduce portions of thus obtained catalyst mud into the polymerization zone in a manner as disclosed, for instance, in EP-A-428 054. The catalyst is described in more detail below.

The present invention includes an embodiment in which a pre-polymerization stage is comprised and an embodiment which does not comprise a pre-polymerization. Both embodiments are equally preferred.

In the embodiment of the present invention comprising a pre-polymerization stage, the pre-polymerization stage precedes the polymerization stages. The purpose of the pre-polymerization is to polymerize a small amount of polymer onto the catalyst at a low temperature and/or a low monomer concentration. By pre polymerization it is possible to improve the performance of the catalyst in slurry and/or modify the properties of the final polymer. The pre-polymerization stage may be conducted in slurry or gas phase. Preferably, the pre-polymerization is conducted in slurry, preferentially a loop reactor. Thus, the pre-polymerization stage may be conducted in a loop reactor.

Furthermore, in the pre-polymerization reactor the residence time and the polymerization temperature are adjusted as such as to polymerize a pre-polymer fraction in an amount of 1 to 5 wt.-%, preferably of 2 to 4 wt.-% and most preferably of 2.5 to 3.5 wt.-% of the total base resin. The pressure is not critical and is typically from 1 bar to 150 bar, preferably from 10 bar to 100 bar.

The polyethylene composition of the invention preferably is produced in a multistage process which further comprises a compounding step, wherein the base resin, which is typically obtained as a base resin powder from the reactor, is extruded in an extruder and then pelletized to polymer pellets in a manner known in the art to form the polyethylene composition of the invention. Optionally, but less preferred, the base resin obtained from the reactor is purged with nitrogen before extrusion.

Optionally, additives and/or other polymer components can be added to the base resin during the compounding step to produce the polyethylene composition of the present invention. Additives typically used with polyolefins are for instance pigments, carbon black, stabilizers (e.g. antioxidant agents), antiacids and/or anti-UV's, antistatic agents and utilization agents (such as processing aid agents). The additives are described in more detail below.

Preferably, the polyethylene composition comprises carbon black in an amount of 8 wt% or below, more preferably in an amount of 1 to 4 wt%, of the total polyethylene composition. Further preferred, the amount of additives different from carbon black is 1 wt% or less, more preferably 0.5 wt% or less.

The additives can be added separately to the compounding step. However, it is preferred to pre-compound them into one or more master batches and add the one or more master batches to the base resin during the compounding step.

It is preferred that the addition of further polymer components is limited to an amount of less than 3 wt.-%, preferably less than 2 wt.-% with respect to the total polyethylene composition according to the present invention.

Preferably, the base resin of the invention obtained from the gas phase reactor is compounded in the extruder together with additives and/or other polymer in a manner known in the art. The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In one embodiment, the extrusion step is carried out using feed rates of 200 kg/h to 600 kg/h, more preferably 250 kg/h to 400 kg/h in pilot production scale. Preferably, the throughput is typically from 10 to 50 tons/h in commercial production.

The following conditions apply to both, the pilot production scale and the commercial production. The screw speed of the extruder is preferably 300 rpm to 500 rpm, more preferably 350 rpm to 450 rpm.

Preferably, in said extrusion step, the SEI (specific energy input) of the extruder is 200 kWh/ton to 300 kWh/ton, more preferably 220 kWh/ton to 280 kWh/ton, whereby the SEI is directly calculated from the electric input of the extruder ignoring the intrinsically limited effectiveness.

The melt temperature in said extrusion step is preferably 220°C to 320°C, more preferably 250°C to 290°C.

Preferably the temperatures at the zones of an extruder having 4 zones are set as follows. Zone 1 is preferably set to 80 to 120°C. Zone 2 is preferably set to 180 to 220°C. Zone 3 is preferably set to 230 to 270°C. Zone 4 is preferably set to 160 to 200°C. More preferably the 4 zones are set as follows: Zone 1 from 90 to 110°C; zone 2 from 190 to 210°C; zone 3 from 240 to 260°C; and zone 4 from 170 to 190°C.

According to the invention the base resin of the polyethylene composition (PC) is obtained by a multistage polymerization process, as described above, in the presence of a catalyst system comprising a Ziegler-Natta catalyst (ZN).

Said Ziegler-Natta catalyst (ZN) obtained by a process comprising the steps of reacting a support, at least the surface of which comprises a magnesium halide compound having the formula (1):

$$(RO)_{2-n}MgX_n \qquad (1)$$

wherein R is a $C_1$-$C_{20}$ alkyl or a $C_7$-$C_{26}$ aralkyl, each same or different X is a halogen, and n is an integer 1 or 2,

an alkyl metal halide compound having the formula (2):

$$R^l_{n1}M_{ml}X^l_{(3ml-nl)} \qquad (2)$$

wherein M is B or Al, each same or different, $R^1$ is a $C_1$-$C_{10}$ alkyl, each same or different. $X^1$ is a halogen, n1 is 1 or 2 when m1 is 1 and n1 is an integer from 1 to 5 when m1 is 2,

a magnesium composition containing magnesium bonded to a hydrocarbyl and magnesium bonded to a hydrocarbyl oxide, said magnesium composition having the empirical formula (3):

$$R^2{}_{n2}(R^3O)_{2-n2}Mg \qquad (3)$$

wherein each same or different $R^2$ is a $C_1$-$C_{20}$ alkyl, each same or different, $R^3$ is a $C_1$-$C_{20}$ alkyl or a $C_1$-$C_{20}$ alkyl containing a hetero element, and n2 is between 0.01 and 1.99,

and a titanium halide compound having the formula (4):

$$(R^4O)_{n3}TiX^2{}_{4-n3} \qquad (4)$$

wherein each same or different $R^4$ is a $C_1$-$C_{20}$ alkyl, each same or different $X^2$ is a halogen, n3 is 0 or an integer 1-3, and Ti is quadrivalent titanium.

By the formula (1) is meant that the inorganic support may be coated by $MgCl_2$ or RoMgCl. Thus n is 1 or 2.

By "magnesium composition" above is meant a mixture or a compound. Note that formula (3) is an empirical formula and expresses the molar amounts of alkyl $R^2$ and alkoxy $OR^3$ relative to the amount of magnesium Mg, which has been defined as 1, and differs from formulas (1), (2) and (4), which disclose the molecular composition of distinct compounds only.

Preferably, the process comprises the subsequent steps of:

a) providing said support comprising a magnesium halide compound having the formula (1),
b) contacting said support comprising a magnesium halide compound having the formula (1) with said alkyl metal halide compound having the formula (2), to give a first product,
c) contacting said first product with said magnesium composition containing magnesium bonded to a hydrocarbyl and magnesium bonded to a hydrocarbyl oxide and having the empirical formula (3), to give a second product, and
d) contacting said second product with said titanium halide compound having the formula (4).

The support used in the process is preferably in the form of particles, the size of which is from about 1 $\mu$m to about 1000 $\mu$m, preferably about 10 $\mu$m to about 100 $\mu$m. The support material must have a suitable particle size distribution, a high porosity and a large specific surface area. A good result is achieved if the support material has a specific surface area between 100 and 500 $m^2$/g support and a pore volume of 1-3 ml/g support.

The above catalyst components (2) to (4) are reacted with a suitable catalyst support. If the catalyst components (2) to (4) are in the form of a solution of low viscosity, a good catalyst morphology and therewith a good polymer morphology can be achieved.

It is advantageous if in the magnesium halide compound having the formula (1), R is a $C_1$-$C_{20}$ alkyl or a $C_7$-$C_{26}$ aralkyl. However, it is preferable, if said compound (1) is a magnesium dihalide, most preferably $MgCl_2$. For example, the support may comprise solid $MgCl_2$, either alone as a powder, or as a powder mixture with other inorganic powders.

According to another embodiment of the invention, the support comprising a magnesium halide compound having the formula (1) also comprises an inorganic oxide. Several oxides are suitable, but silicon, aluminium, titanium, chromium and zirconium oxide or mixtures thereof are preferred. The most preferred inorganic oxides are silica, alumina, silica-alumina, magnesia and mixtures thereof, uttermost preferably silica. The inorganic oxide can also be chemically pretreated, e. g. by silylation or by treatment with aluminium alkyls.

It is recommendable to dry the inorganic oxide before impregnating it by other catalyst components. A good result is achieved if the oxide is heat-treated at 100 C to 900 C for a sufficient time, and thereby the surface hydroxyl groups, in the case of silica, are reduced to below 2 mmol/g SiOz.

According to this aspect of the invention, the support comprises particles having a core comprising said inorganic oxide and a shell comprising said magnesium halide compound having the formula (1). Then, the support comprising a magnesium halide compound having the formula (1) and an inorganic oxide can conveniently be prepared by treating particles of the inorganic oxide with a solution of the magnesium halide and removing the solvent by evaporation.

When using a support containing both said magnesium halide compound (1) and another component, the amount of magnesium halide compound (1) is such that the support contains from 1 to 20 % by weight, preferably from 2 to 6 % by weight, of magnesium.

The invention further comprises a step of reacting an alkyl metal halide compound of the formula (2):

$$R^1_{n1}M_{m1}X^1_{(3m1-n1)} \qquad (2)$$

wherein M is B or Al, each same or different, $R^1$ is a $C_1$-$C_{10}$ alkyl, each same or different, $X^1$ is a halogen, m1 is 1 or 2, n1 is 1 or 2 when m 1 is 1 and n1 is an integer from 1 to 5 when m1 is 2. In formula (2), M is preferably Al. Each same or different $R^1$ is preferably a Ci-Ce alkyl, and, independently, the preferred same or different halogen $X^1$ is chlorine, n1 is preferably 1 and m 1 is preferably the integer 1 or 2. Most preferably, the alkyl metal halide compound having the formula (2) is an alkyl aluminum dichloride, e. g. ethyl aluminum dichloride (EADC).

The alkyl metal halide compound is preferably deposited on the support material. An even deposition is preferably achieved if the viscosity of the halide or its solution is below 10 mPa*s at the temperature applied. To achieve this low viscosity the alkyl metal halide can be diluted by a non-polar hydrocarbon. The best deposition is however achieved if the total volume of the absorbed alkyl metal halide solution is not exceeding the pore volume of the support. A good choice is to use a 5-25% hydrocarbon solution of ethyl aluminum dichloride. The number of additions of the halide is preferably adjusted so that the technique are of not exceeding the pore volume at any additions is not violated, thereby giving an even distribution of the chemical in the surface of the support material.

In the above mentioned preferred order of reaction steps a) to d), step b) can advantageously be performed so that undiluted alkyl metal halide (2) is used to treat the support comprising a magnesium halide compound having the formula (1).

Alternatively, the support is contacted with a solution of the alkyl metal halide compound having the formula (2) in an essentially non-polar solvent, preferably a non-polar hydrocarbon solvent, most preferably a $C_4$-$C_{10}$ hydrocarbon. The concentration of the alkyl metal halide compound having the formula (2) in said non-polar solvent is usually 1-80% by weight, preferably 5-40% by weight, most preferably 10-30% by weight. Advantageously, the support is contacted with a solution of said alkyl metal halide compound (2) in a ratio mol of the alkyl metal halide compound (2) to grams of the support of between about 0.01 mmol/g and about 100 mmol/g, preferably between about 0.5 mmol/g and about 2.0 mmol/g.

The amount of reactants can also be expressed as molar ratio, whereby it is advantageous, if the molar ratio of said alkyl metal halide compound (2) to said magnesium halide compound (1) of the support is between about 0.01 mol/mol to about 100, preferably about 0.1 mol/mol to about 10, most preferably from about 0.2 to about 3.0.

In step b), the temperature at said contacting is e.g. 5-80 °C, preferably 10-50 °C, most preferably 20-40 °C. The duration of said contacting is 0.1-3 h, preferably 0.51.5 h.

In the process, the magnesium composition containing magnesium bonded to a hydrocarbyl and magnesium bonded to a hydrocarbyl oxide and having the empirical formula (3), each same or different $R^2$ is preferably a $C_2$-$C_{10}$ alkyl, most preferably a $C_2$-$C_8$ alkyl. Each same or different $R^3$ is preferably a $C_3$-$C_{20}$ alkyl, more preferably a branched $C_4$-$C_{10}$ alkyl, most preferably a 2-ethyl-1-hexyl or a 2-propyl-1-pentyl.

The magnesium composition containing magnesium bonded to a hydrocarbyl and magnesium bonded to a hydrocarbyl oxide having the empirical formula (3) can also be defined by its preparation. According to one embodiment of the invention, it is a contact product of a dialkyl magnesium having the formula (5):

$$R^2_2Mg \qquad (5)$$

wherein each same or different $R^2$ is defined as above, and an alcohol. Preferably, the dialkyl magnesium having the formula (5) is dibutyl magnesium, butyl ethyl magnesium or butyl octyl magnesium.

The magnesium composition can thus be defined in that the magnesium composition containing magnesium bonded to a hydrocarbyl and magnesium bonded to a hydrocarbyl oxide having the empirical formula (3) is a contact product of a dialkyl magnesium and an alcohol having the formula (6):

$$R^3OH \qquad (6)$$

wherein each same or different $R^3$ is the same as above. Preferably, the alcohol having the formula (6) is a 2-alkyl alkanol, most preferably 2-ethyl hexanol or 2-propyl pentanol. It has been found that such branched alcohols give better results than linear alcohols.

Preferably, the magnesium composition containing magnesium bonded to a hydrocarbyl and magnesium bonded to a hydrocarbyl oxide having the empirical formula (3) is a contact product of a dialkyl magnesium and an alcohol in a molar ratio alcohol to dialkyl magnesium of 0.01-100 mol/mol, preferably 1.0-5.0 mol/mol, more preferably 1.7-2.0 mol/mol, most preferably 1.8-1.98 mol/mol. The dialkyl magnesium and the alcohol are conveniently contacted by adding the alcohol to a solution of said dialkyl magnesium in an organic solvent, e.g. a $C_4$-$C_{10}$ hydrocarbon. Then, the concentration of the solution is preferably between 1 and 50% by weight, most preferably between 10 and 30% by weight.

The contacting temperature between the dialkyl magnesium and the alcohol is preferably 10-50 °C, more preferably from about 20 °C to about 35 °C.

In step c) of the above mentioned preferred order a) to d) of the claimed process, the contacting product of the support with the alkyl metal halide compound (2), i.e. said first product, is contacted with said magnesium composition containing magnesium bonded to a hydrocarbyl and magnesium bonded to a hydrocarbyl oxide and having the empirical formula (3).

Preferably, said first product is contacted with said magnesium composition (3) in a ratio moles of magnesium/g of the support of between 0.001-1000 mmol/g, preferably 0.01-100 mmol/g, most preferably 0.1-10 mmol/g (g of the support means, in the case of said first reaction product, the support which was used as starting material for the first reaction product).

A good deposition of said magnesium composition as a solution is achieved if the volume of the magnesium composition (3) solution is about two times the pore volume of the support material. This is achieved if the concentration of the composition in a hydrocarbon solvent is between 5-60% in respect of the hydrocarbon used. When depositing the magnesium composition on the support material its hydrocarbon solution should have a viscosity that is lower than 10 mPa*s at the temperature applied. The viscosity of the magnesium complex solution can be adjusted for example by the choice of the group $R^4$ in the formula (3), by the choice of the concentration of the hydrocarbon solution, by the choice of the ratio between the magnesium alkyl and the alcohol or by using some viscosity lowering agent. The titanium compound can be added to the support material with or without a previous drying of the catalyst to remove the volatile hydrocarbons.

Remaining hydrocarbons can if desired be removed by using slight under pressure, elevated temperature or nitrogen flash.

In the claimed process, the transition metal compound is a titanium halide compound having the formula (4). $R^4$ is preferably a $C_2$-$C_8$ alkyl, most preferably a $C_2$-$C_6$ alkyl. $X^2$ is preferably chlorine and, independently, n3 is preferably 0. Said titanium halide compound having the formula (4) is advantageously titanium tetrachloride.

According to one embodiment of the invention, in addition to said titanium compound having the formula (4), a titanium compound having the formula (7):

$$(R^5O)_{n4}TiX^3{}_{4-n4} \qquad (7)$$

wherein each same or different $R^5$ is a $C_1$-$C_{20}$ alkyl, preferably a $C_2$-$C_8$ alkyl, most preferably a $C_2$-$C_6$ alkyl, each same or different $X^3$ is a halogen, preferably chlorine, n4 is an integer 1-4, and Ti is quadrivalent titanium, is reacted. The titanium compound (7) always has at least one alkoxy group, which helps dissolving the titanium compound (4) which does not necessarily contain alkoxide, into an organic solvent before the contacting. Naturally, the more alkoxide groups compound (4) has, the less is the need for compound (7). If compound (7) is used, the preferable combination is that of titanium tetrachloride and a titanium tetra Ci-Ce-alkoxide.

In step d) of the preferred step sequence a) to d), said second product is advantageously contacted with the titanium compound having the formula (4) in a ratio moles of said titanium compound/g of the support of 0.01-10 mmol/g, preferably 0.1-2 mmol/g. Preferably, said second reaction product is contacted with said titanium compound (4) in a ratio moles of said titanium compound (4)/moles of the magnesium compound (3) of 0.05-2 mol/mol, preferably 0.1-1.2 mol/mol, most preferably 0.2-0.7 mol/mol. The temperature is usually 10-80 °C, preferably 30-60 °C, most preferably from about 40 °C to about 50 °C, and the contacting time is usually 0.5-10 h, preferably 2-8 h, most preferably from about 3.5 h to about 6.5 h.

In the polymerization, said alkyl metal halide compound of the formula (2) can, if used, also act completely or partially as a cocatalyst. However, it is preferable to add a cocatalyst having the formula (9):

$$R^6{}_{n5}AlX^4{}_{3-n5} \qquad (9)$$

wherein R6 is a $C_1$-$C_{20}$ alkyl, preferably a $C_1$-$C_{10}$ alkyl, most preferably a $C_2$-$C_6$ alkyl such as ethyl, X is a halogen, preferably chlorine, n is 1 to 3, more preferably 2 or 3, most preferably 3, to the polymerization mixture. The cocatalyst having the formula (9) is optional depending on whether said alkyl metal halide compound (2) is acting as cocatalyst or not.

According to step b) of the inventive process, the base resin may be blended with additives (AD) and/or fillers.

Typical additives are acid scavengers, antioxidants, colorants, light stabilisers, plasticizers, slip agents, anti-scratch agents, dispersing agents, processing aids, lubricants, pigments, fillers and the like. Regarding the fillers, reference is made to the definition provided above. Such additives are commercially available and for example described in "Plastic Additives Handbook", 6th edition 2009 of Hans Zweifel (pages 1141 to 1190).

Furthermore, the term "additives (AD)" according to the present invention also includes carrier materials, in particular polymeric carrier materials.

*The Polymeric Carrier Material (i.e. masterbatch carrier polymer)*

Preferably the polyethylene composition (PC) of the invention does not comprise (a) further polymer(s) different to first ethylene polymer (B1) and the second ethylene polymer (B2), in an amount exceeding 15 wt.-%, preferably in an amount exceeding 10 wt.-%, more preferably in an amount exceeding 9 wt.-%, based on the weight of the polyethylene composition (PC). If an additional polymer is present, such a polymer is typically a polymeric carrier material for the additives (AD). Any carrier material for additives (AD) is not calculated to the amount of polymeric compounds as indicated in the present invention, but to the amount of the respective additive.

The polymeric carrier material of the additives (AD) is a carrier polymer to ensure a uniform distribution in the polyethylene composition (PC) of the invention. The polymeric carrier material is not limited to a particular polymer. The polymeric carrier material may be ethylene homopolymer, ethylene copolymer obtained from ethylene and $\alpha$-olefin comonomer such as $C_3$ to $C_8$ $\alpha$-olefin comonomer, propylene homopolymer and/or propylene copolymer obtained from propylene and $\alpha$-olefin comonomer such as ethylene and/or $C_4$ to $C_8$ $\alpha$-olefin comonomer.

According to step c) of the inventive process, the polyethylene composition (PC) is extruded through a suitable die, thereby obtaining the pipe.

Polymeric pipes are generally manufactured by extrusion, or, to a small extent, by injection moulding. A conventional plant for extrusion of polymer pipes comprises an extruder, a die-head, a calibrating device, a cooling equipment, a pulling device, and a device for cutting and/or for coiling up the pipe.

The manufacture of polyethylene materials for use in pressure pipes is discussed in an article by Scheirs et al (Scheirs, Böhm, Boot and Leevers: PE100 Resins for Pipe Applications, TRIP Vol. 4, No. 12 (1996) pp. 408-415). The authors discuss the production technology and properties of PE100 pipe materials. They point out the importance of proper comonomer distribution and molecular weight distribution in order to optimize slow crack growth and rapid crack propagation.

The present invention will now be described in further detail by the examples provided below.

## EXAMPLES

### 1. Measuring methods

The following definitions of terms and determination methods apply for the above general description of the invention as well as to the below examples unless otherwise defined.

**$MFR_2$ (190 °C)** is measured according to ISO 1133 (190 °C, 2.16 kg load).

**$MFR_5$ (190 °C)** is measured according to ISO 1133 (190 °C, 5.0 kg load).

**$MFR_{21}$ (190 °C)** is measured according to ISO 1133 (190 °C, 21.6 kg load).

**Density** of the polymer was measured according to IS0 1183-1:2004 Method A on compression moulded specimen prepared according to EN IS0 1872-2 (Feb 2007) and is given in $kg/m^3$.

**The comonomer content** of the polymers was determined by quantitative nuclear-magnetic resonance (NMR) spectroscopy. Quantitative $^{13}C\{^1H\}$ NMR spectra recorded in the molten-state using a Bruker Advance III 500 NMR spectrometer operating at 500.13 and 125.76 MHz for $^1H$ and $^{13}C$, respectively. All spectra were recorded using a $^{13}C$ optimized 7 mm magic-angle spinning (MAS) probehead at 150 °C using nitrogen gas for all pneumatics.

Approximately 200 mg of material was packed into a 7 mm outer diameter zirconia MAS rotor and spun at 4 kHz. This setup was chosen primarily for the high sensitivity needed for rapid identification and accurate quantification {[1], [2], [6]}. Standard single-pulse excitation was employed utilizing the transient NOE at short recycle delays of 3 s {[1], [3]} and the RSHEPT decoupling scheme {[4], [5]}. A total of 1024 (1k) transients were acquired per spectrum. This setup was chosen due to its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta$+) at 30.00 ppm {[9]}.

Characteristic signals corresponding to the incorporation of 1-hexene were observed {[9]} and all contents calculated with respect to all other monomers present in the polymer.

$$H = I_{*B4}$$

With no other signals indicative of other comonomer sequences, i.e. consecutive comonomer incorporation, observed the total 1-hexene comonomer content was calculated based solely on the amount of isolated 1-hexene sequences:

$$H_{total} = H$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)*(I_{2S} + I_{3S})$$

The relative content of ethylene was quantified using the integral of the bulk methylene (δ+) signals at 30.00 ppm:

$$E = (1/2)*I_{\delta+}$$

The total ethylene comonomer content was calculated based on the bulk methylene signals and accounting for ethylene units present in other observed comonomer sequences or end-groups:

$$E_{total} = E + (5/2)*B + (3/2)*S$$

The total mole fraction of 1-hexene in the polymer was then calculated as:

$$fH = ( H_{total} / ( E_{total} + H_{total} )$$

The total comonomer incorporation of 1-hexene in mole percent was calculated from the mole fraction in the usual manner:

$$H \, [mol\%] = 100 * fH$$

The total comonomer incorporation of 1-hexene in weight percent was calculated from the mole fraction in the standard manner:

$$H \, [wt\%] = 100 * (fH * 84.16) / ( (fH * 84.16) + ((1-fH) * 28.05) )$$

[1] Klimke, K., Parkinson, M., Piel, C., Kaminsky, W., Spiess, H.W., Wilhelm, M., Macromol. Chem. Phys. 2006; 207:382.
[2] Parkinson, M., Klimke, K., Spiess, H.W., Wilhelm, M., Macromol. Chem. Phys. 2007; 208:2128.
[3] Pollard, M., Klimke, K., Graf, R., Spiess, H.W., Wilhelm, M., Sperber, O., Piel, C., Kaminsky, W., Macromolecules 2004; 37:813.
[4] Filip, X., Tripon, C., Filip, C., J. Mag. Reson. 2005, 176, 239.
[5] Griffin, J.M., Tripon, C., Samoson, A., Filip, C., and Brown, S.P., Mag. Res. in Chem. 2007, 45, S1, S198.
[6] Castignolles, P., Graf, R., Parkinson, M., Wilhelm, M., Gaborieau, M., Polymer 50 (2009) 2373.
[7] Zhou, Z., Muemmerle, R., Qiu, X., Redwine, D., Cong, R., Taha, A., Baugh, D. Winniford, B., J. Mag. Reson. 2007, 187, 225.
[8] Busico, V., Carbonniere, P., Cipullo, R., Pellecchia, R., Severn, J., Talarico, G., Macromol. Rapid Commun. 2007, 28, 1128.
[9] J. Randall, Macromol. Sci., Rev. Macromol. Chem. Phys. 1989, C29, 201.

**The amount of hexane solubles (C6) [in wt.-%]** was determined via Soxhlet extraction. Around 1 g of a powdered test portion is carefully dried and weighed out exactly. The powdered test portion is extracted in a Soxhlet-apparatus with 150 ml n-hexane (p.a. quality) during 24 h. As thimble a standard 603 cellulose extraction thimble is used. To avoid that polymer powder will leave the extraction thimble it is closed on the top with another half cut thimble. The weight of the glass extractor including the polymer after extraction is weighed out after reaching constant weight. The mass of residue of the test portion in the glass extractor is determined in the following way:

$$C6 \text{ solubles } (\%)) = ((m2 - mt ))/m1 \times 100$$

with:

m1= original sample weight
m2 = weight of the glass extractor with polymer after extraction
mt = weight of the glass extractor.

**Pressure test on notched pipes (NPT); Slow crack propagation resistance:**

The slow crack propagation resistance is determined according to ISO 13479-2009 in terms of the number of hours the pipe withstands a certain pressure at a certain temperature before failure. The pressure test is carried out on notched SDR11 pipes having a outer diameter of 110 mm. A pressure of 4.6 MPa and a temperature of 80 °C have been used. Notching is made with a climb milling cutter with a 60° included-angle V-cutter conforming to ISO 6108, having a cutting rate of $0.010 \pm 0.002$ (mm/rev)/tooth. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference. The length of the notch is $110 \pm 1$ mm.

$$h = 0.5 \left[ d_{em} - \sqrt{(d_{em}^2 - b_s^2)} \right] + 0.866\, b_s$$

where

$b_s$ is the width of machined surface of the notch in mm;
$d_{em}$ is the measured mean pipe outside diameter in mm.

**Hydrostatic pressure test (HPT) on un-notched pipes; resistance to internal pressure:**

The resistance to internal pressure has been determined in a pressure test on pressure test on un-notched 32 mm SDR 11 pipes having a length of 450 mm is carried out in water-inside and water-outside environment according to ISO 1167-1:2006. End caps of type A were used. The time to failure is determined in hours. A hoop stress of 5.7 and 5.9 MPa at a temperature of 80°C and at a hoop stress at 12.2 and 12.6 MPa tested at a temperature of 20°C was applied.

**Strain hardening modulus** of the compounds was obtained from a tensile stress-strain curve above the natural draw ratio and represents the slope of the increase in the stress-strain trend at very high strains (the strain hardening regime). It was measured at 80°C and 20 mm/min on preconditioned (120°C/1 h) 300 $\mu$m thick specimens according to ISO 18488.

**2. Examples**

**Preparation of the catalyst**

7.9 g (60.8 mmol) of 2-ethyl-1-hexanol was added slowly to 27.8 (33.2 mmol) of 19.9 % butyl-octyl-magnesium. The reaction temperature was kept under 35 °C. This complex was used in the following catalyst preparation. 2-ethyl-1-hexanol/butyl-octyl-magnesium ratio is 1.83:2.

3.7 g (1.0 mmol/g carrier) of 20% EADC was added to 5.9 g of Sylopol 5510 silica/$MgCl_2$ carrier and the mixture was stirred for one hour at 30 °C. 5.7 g (0.9 mmol/g carrier) of the complex prepared as described above was added and the mixture was stirred for 4 hours at 35-45 °C. 0.6 g (0.55 mmol/g carrier) of TiCl4 was added and the mixture was stirred for 5 hours at 45 °C. the catalyst was dried at 45-80 °C for 3 hours.

Composition of the catalyst: Al 1.8%, Mg 3.9%, Ti 2.1%, Cl 18.6%.

**Preparation of the polyethylene compositions (C) for the inventive pipes**

A loop reactor having a volume of 50 $dm^3$ was operated at 60 °C and 65 bar pressure. For producing a prepolymer fraction 50 kg/h propane diluent, 2 kg/h ethylene and 5 g/h hydrogen were introduced into the reactor. In addition, the above described catalyst was introduced into the reactor together with triethylaluminium cocatalyst so that the ratio of aluminium to titanium was 15 mol/mol. No comonomer was introduced into the reactor. The conditions in the reactor were as shown in Table 1.

The polymer slurry was withdrawn from the loop reactor and transferred into a loop reactor having a volume of 500

dm$^3$. This second loop reactor was operated at 95°C and 65 bar pressure. Into the reactor were introduced propane diluent, ethylene and hydrogen whereby the molar hydrogen to ethylene ratio is listed in Tables 1 and 4. The polymerization rate and the conditions in the reactor are shown in Tables 1 and 4.

The polymer slurry was withdrawn from the second loop reactor and transferred into a flash vessel where the hydrocarbons were substantially removed from the polymer. The polymer was then introduced into a gas phase reactor operated at a temperature of 85 °C and a pressure of 20 bar. In addition ethylene, 1-hexene, nitrogen as inert gas and hydrogen was introduced into the reactor whereby the molar 1-hexene to ethylene ratio and the molar hydrogen to ethylene ratio as well as the production split, the melt flow rates and the density of the polymers withdrawn from the gas phase reactor are listed in Table 1. The polymerization rates and conditions are shown in Table 1.

The resulting polymer was purged with nitrogen (about 50 kg/h) for one hour, stabilized with 2200 ppm of Irganox B225 and 1500 ppm Ca-stearate and then extruded together with 5.75 wt% carbon black masterbatch (containing 40 wt.-% carbon black and 60 wt.-% of HDPE) to pellets in a counter-rotating twin screw extruder CIM90P (manufactured by Japan Steel Works) The temperature profile in each zone was 90/120/190/250 °C.

## Preparation of the polyethylene compositions for the comparative pipes

The polyethylene compositions for the comparative pipes was polymerized using the same procedure as for the inventive compositions with the difference that Lynx 200 catalyst, commercially available from W.R. Grace (US), was employed. Catalyst and cocatalyst components were applied with a ratio of aluminum to titanium of 15 mol/mol. The reactor configurations are shown in Table 1. The resultant base resins were treated and compounded as the inventive compositions.

CE3 to CE5 are also bimodal C2/C2C6 copolymers that were sourced from various commercial sources and are similar to CE1 and CE2 in nature.

## Pipe preparation

The compounded compositions were extruded to SDR 11 pipes for the pressure resistance test and the Notched Pipe test.

**Table 1:** Preparation of the base resins for the inventive and comparative pipes

|  |  | CE1 | CE2 | IE1 | IE2 | IE3 | IE4 | IE5 | IE6 | IE7 | IE8 |
|---|---|---|---|---|---|---|---|---|---|---|---|
| **Prepoly** |  |  |  |  |  |  |  |  |  |  |  |
| Temperature | [°C] | 60 | 60 | 70 | 70 | 70 | 70 | 70 | 70 | 70 | 70 |
| Pressure | [bar] | 65 | 65 | 57.4 | 57.4 | 65 | 65 | 57.3 | 65 | 65 | 65 |
| Split | [wt.-%] | 2 | 2 | 1.7 | 1.7 | 2 | 2 | 1.9 | 2 | 2 | 2 |
| **Loop (Bulk) (R1)** |  |  |  |  |  |  |  |  |  |  |  |
| Temperature | [°C] | 95 | 95 | 95 | 95 | 95 | 95 | 95 | 95 | 95 | 95 |
| Pressure | [bar] | 65 | 65 | 55.7 | 55.8 | 65 | 65 | 55.9 | 65 | 65 | 65 |
| H2/C2 | [mol/kmol] | 1007 | 1016 | 478 | 500 | 509 | 554 | 630 | 526 | 485 | 515 |
| C2-concentration | [mol-%] | 3.9 | 3.8 | 4.4 | 5.3 | 4.46 | 4.47 | 7.3 | 4.17 | 4.41 | 4.5 |
| Production rate | [kg/h] | 16 | 17.5 | 54 | 50 | 14.82 | 35 | 48 | 14.8 | 35 | 16 |
| Split | [wt.-%] | 48 | 48 | 49 | 45.9 | 45 | 45 | 47.8 | 45 | 45 | 47 |
| MFR$_2$ | [g/10min] | 277 | 256 | 316 | 290 | 180 | 250 | 220 | 210 | 150 | 200 |
| Density | [kg/m$^3$] | 972.8 | 972.8 | 970 | 970 | 972.7 | 973.5 | 972 | 973.2 | 973 | 972.8 |
| **GPR (R2)** |  |  |  |  |  |  |  |  |  |  |  |
| Temperature | [°C] | 85 | 85 | 85 | 85 | 85 | 85 | 85 | 85 | 85 | 85 |
| Pressure | [bar] | 20 | 20 | 20 | 20 | 20 | 20 | 20 | 20 | 20 | 20 |
| H2/C2 | [mol/kmol] | 18.3 | 19 | 2.0 | 2.8 | 2.4 | 4.9 | 5.0 | 5.1 | 7.5 | 4.8 |
| C6/C2 | [mol/kmol] | 68 | 66 | 72 | 68 | 70.5 | 68 | 31 | 64.8 | 48 | 69 |

(continued)

| GPR (R2) | | | | | | | | | | | |
|---|---|---|---|---|---|---|---|---|---|---|---|
| C2-concentration | [mol-%] | 10 | 10 | 4.4 | 6.2 | 10 | 10 | 5.6 | 10 | 10 | 10 |
| Production rate | [kg/h] | 16 | 17.6 | 55 | 58 | 18 | 46 | 50 | 18 | 46 | 17 |
| Split | [wt.-%] | 49 | 49 | 49 | 53 | 53 | 53 | 50 | 53 | 53 | 51 |
| Density | [kg/m$^3$] | 949 | 950 | 949.8 | 949 | 948.5 | 947.6 | 950 | 948.6 | 951 | 948.6 |

Table 2: Composition and properties of the polyethylene compositions for the inventive and comparative pipes

|  |  | CE1 | CE2 | CE3 | CE4 | CE5 | IE1 | IE2 | IE3 | IE4 | IE5 | IE6 | IE7 | IE8 |
|---|---|---|---|---|---|---|---|---|---|---|---|---|---|---|
| CB | [wt.-%] | 5.75 | 5.75 | 5.75 | 5.75 | 5.75 | 5.75 | 5.75 | 5.75 | 5.75 | 5.75 | 5.75 | 5.75 | 5.75 |
| Density | [kg/m$^3$] | 985.8 | 959.5 | 959.5 | 960.1 | 959.9 | 961.9 | 959.5 | 959.1 | 958.9 | 963.1 | 960.1 | 962.3 | 959.5 |
| $MFR_5$ | [g/10min] | 0.23 | 0.22 | 0.23 | 0.27 | 0.21 | 0.21 | 0.17 | 0.20 | 0.24 | 0.17 | 0.22 | 0.24 | 0.25 |
| $MFR_{21}$ | [g/10min] | 7.6 | 7.7 | 8.1 | 8.6 | 7.1 | 6.7 | 5.81 | 6.6 | 7.7 | 5.6 | 6.8 | 7.6 | 8.1 |
| $FRR_{21/5}$ | [-] | 33 | 32.7 | 35.2 | 32 | 33.8 | 32 | 34 | 33 | 32 | 33 | 31 | 32 | 32 |
| CB is a carbon black masterbatch containing 40 wt% of carbon black and 60 wt% of HDPE, meaning that each example contains 2.3 wt.-% of carbon black. | | | | | | | | | | | | | | |

**Table 3:** Properties of the inventive and comparative pipes

|  |  | CE1 | CE2 | CE3 | CE4 | CE5 | IE1 | IE2 | IE3 | IE4 | IE5 | IE6 | IE7 | IE8 |
|---|---|---|---|---|---|---|---|---|---|---|---|---|---|---|
| HPT | [h] | 280 | n.m. | 226 | n.m. | n.m. | 312 | 270 | 260 | 257 | 176 | n.m. | n.m. | 218 |
| HPT | [h] | 156 | n.m. | n.m. | n.m. | n.m. | 133 | 118 | n.m. | n.m. | 156 | 217 | 1540 | n.m. |
| HPT | [h] | 23.8 | 101 | 123 | 4 | 5 | n.m. | n.m. | 4653 | 2174 | n.m. | n.m. | n.m. | 2286 |
| HPT | [h] | n.m. | n.m. | n.m. | 17 | 27 | 537 | 429 | 571 | 205 | 788 | 703 | 5089 | 64 |
|  |  |  |  |  |  |  |  |  |  |  |  |  |  |  |
| NPT | [h] | 13000 | 6500 | n.m. | n.m. | n.m. | 6103 | 7639 | 5853 | 5996 | 3048 | 930 | 1056 | 5654 |
|  |  |  |  |  |  |  |  |  |  |  |  |  |  |  |
| Strain | [MPa] | 72.6 | 71.2 | 69 | 65.2 | 70.2 | 79.8 | 76.3 | 73.9 | 72.6 | 70.4 | 66.2 | 56.4 | 68.5 |

As can be gathered from Table 3, the HPT failure times at 5.9 MPa and 80 °C are less than 30 h for comparative examples CE4 and CE5. The corresponding values of the inventive examples are significantly higher.

Figure 1 shows the log(HPT) at 5.9 MPa and 80 °C as a function of the Strain Hardening modulus and Figure 2 shows the log(HPT) at 5.7 MPa and 80 °C as a function of the Strain Hardening modulus. The inventive examples fulfil the in-equations

$$\log(\text{HPT}_{5.9}) \geq -0.0539 * \text{SH} + 5.795$$

and

$$\log(\text{HPT}_{5.7}) \geq -0.1747 * \text{SH} + 14.799.$$

Similarly, the failure times in hydrostatic pressure testing at 12.4 MPa and 20 °C and at 5.7 MPa at 80 °C of IE3, IE4 and IE8 are higher than the corresponding failure times of CE1, CE2 and CE3 at similar strain hardening values.

**Claims**

1. Base resin (B), comprising

    i) 30.0 to 70.0 wt.-% of a first ethylene polymer (B1) being an ethylene homopolymer or a copolymer of ethylene and a $C_3$-$C_8$ $\alpha$-olefin, and
    ii) 30.0 to 70.0 wt.-% of second ethylene polymer (B2) being a copolymer of ethylene and a $C_3$-$C_8$ $\alpha$-olefin having a lower density than the first copolymer (B1),
    based on the overall weight of the base resin (B).

2. Base resin (B) according to claim 1, having an amount of hexane solubles, determined according to the method given in the measuring methods, less than or equal to 1.30 wt.-%, based on the overall weight of the base resin (B).

3. Base resin (B) according to any one of the preceding claims, wherein the first ethylene polymer (B1) has a density determined according to ISO 1183-1:2004 in the range of 960 to 980 kg/m$^3$, and/or a molecular weight distribution (Mw/Mn) less than or equal to 29.4.

4. Base resin (B) according to any one of the preceding claims, wherein the first ethylene polymer (B1) is an ethylene homopolymer and the second copolymer (B2) is a copolymer of ethylene and 1-hexene.

5. Base resin (B) according to any one of the preceding claims, wherein the base resin (B) is obtained in the presence of a Ziegler-Natta catalyst (ZN) obtained by a process comprising the steps of reacting a support, at least the surface of which comprises a magnesium halide compound having the formula (1):

    $$(\text{RO})_{2-n}\text{MgX}_n \qquad (1)$$

wherein R is a $C_1$-$C_{20}$ alkyl or a $C_7$-$C_{26}$ aralkyl, each same or different X is a halogen, and n is an integer 1 or 2, an alkyl metal halide compound having the formula (2):

$$R^l_{n1}M_{m1}X^l_{(3m1-n1)} \qquad (2)$$

wherein M is B or Al, each same or different, $R^1$ is a $C_1$-$C_{10}$ alkyl, each same or different. $X^1$ is a halogen, n1 is 1 or 2 when m1 is 1 and n1 is an integer from 1 to 5 when m1 is 2,
a magnesium composition containing magnesium bonded to a hydrocarbyl and magnesium bonded to a hydrocarbyl oxide, said magnesium composition having the empirical formula (3):

$$R^2_{n2}(R^3O)_{2-n2}Mg \qquad (3)$$

wherein each same or different $R^2$ is a $C_1$-$C_{20}$ alkyl, each same or different, $R^3$ is a $C_1$-$C_{20}$ alkyl or a $C_1$-$C_{20}$ alkyl containing a hetero element, and n2 is between 0.01 and 1.99,
and a titanium halide compound having the formula (4):

$$(R^4O)_{n3}TiX^2_{4-n3} \qquad (4)$$

wherein each same or different $R^4$ is a $C_1$-$C_{20}$ alkyl, each same or different $X^2$ is a halogen, n3 is 0 or an integer 1-3, and Ti is quadrivalent titanium.

6. Polyethylene composition (PC), comprising

   a) at least 90 wt.-%, based on the total weight of the polyethylene composition (PC), of the base resin (B) according to any one of claims 1 to 5,
   b) a pigment (P), and
   c) optionally additives (AD).

7. Polyethylene composition (PC) according to claim 6, having

   i) a density determined according to ISO 1183-1:2004 in the range of 957 to 965 kg/m$^3$, and
   ii) a flow rate ratio $FRR_{21/5} = MFR_{21}/MFR_5$ in the range of 27 to 36, wherein $MFR_5$ is the melt flow rate determined according to ISO 1133 at a temperature of 190 °C and a load of 5.0 kg and $MFR_2$, is the melt flow rate determined according to ISO 1133 at a temperature of 190 °C and a load of 21.6 kg.

8. Polyethylene composition (PC) according to any one of claims 6 to 7, wherein the pigment (P) is selected from the group consisting of carbon black, molybdenum orange and cadmium orange.

9. Polyethylene composition (PC) according to any one of claims 6 to 8, having a melt flow rate $MFR_5$ (5.0 kg, 190 °C) determined according to ISO 1133 below 2.0 g/10 min and/or a melt flow rate $MFR_{21}$ (21.6 kg, 190 °C) determined according to ISO 1133 in the range of 0.5 to 12.0 g/10 min.

10. Polyethylene composition (PC) according to any one of claims 6 to 9, having a strain hardening modulus in the range of 50.0 to 85.0 MPa.

11. Pipe, comprising at least 90 wt.-% of the polyethylene composition (PC) according to any one of claims 6 to 10.

12. Pipe according to claim 11, fulfilling in-equation (II) and/or in-equation (III)

$$(II) \qquad \log(HPT_{5.9}) \geq -0.0539 \times SH + 5.795$$

$$(III) \qquad \log(HPT_{5.7}) \geq -0.1747 \times SH + 14.799,$$

wherein $HPT_{5.9}$ is the hydrostatic pressure test value of the pipe in [h] determined at a pressure of 5.9 MPa and a temperature of 80 °C, $HPT_{5.7}$ is the hydrostatic pressure test value of the pipe in [h] determined at a pressure of 5.7 MPa and a temperature of 80 °C, and SH is the strain hardening modulus in [MPa] of the polyethylene composition (PC).

13. Pipe according to any one of claims 11 to 12, wherein the pipe is a fluid pipe, preferably an oil or water pipe.

14. Pipe according to any one of claims 11 to 13, wherein the pipe is a pressure pipe.

15. Process for preparing a pipe according to any one of claims 11 to 14, comprising the steps of

a) preparing the base resin (B) in a sequential process comprising at least two reactors, wherein

i) ethylene and optionally a $C_3$-$C_8$ $\alpha$-olefin are polymerized in a first reactor (R1), thereby obtaining the first ethylene polymer (B1) fulfilling in-equation (IV)

$$(IV) \quad \frac{H_2/C_2(R1)}{MFR_2(R1)} \leq 3.5$$

wherein $H_2/C_2(R1)$ is the molar ratio of hydrogen and ethylene in [mol/kmol] in the first reactor (R1) and $MFR_2$ (R1) is the melt flow rate $MFR_2$ (2.16 kg, 190 °C) determined according to ISO 1133 of the first ethylene polymer (B1) obtained in the first reactor (R1),
ii) transferring the first ethylene polymer (B1) obtained in the first reactor (R1) into a second reactor (R2),
iii) polymerizing ethylene and a $C_3$-$C_8$ $\alpha$-olefin in the second reactor (R2) in the presence of the first ethylene polymer (B1), thereby obtaining the second ethylene polymer (B2), wherein the first ethylene polymer (B1) and the second ethylene polymer (B2) together form the base resin (B) fulfilling in-equation (V)

$$(V) \quad \frac{H_2/C_2(R2)}{MFR_5(R2)} \leq 50.0$$

wherein $H_2/C_2(R2)$ is the molar ratio of hydrogen and ethylene in [mol/kmol] in the second reactor (R2) and $MFR_5(R2)$ is the melt flow rate $MFR_5$ (5.0 kg, 190 °C) determined according to ISO 1133 of the base resin (B),

b) blending the base resin with the pigment (P) and optionally additives (AD), thereby obtaining the polyethylene composition (PC), and
c) extruding the polyethylene composition (PC) through a suitable die, thereby obtaining the pipe.

**Figure 1**    log(HPT) at 5.9 MPa and 80 °C as a function of the Strain Hardening modulus

**Figure 2**    log(HPT) at 5.7 MPa and 80 °C as a function of the Strain Hardening modulus

**EP 4 574 894 A1**

<table>
<tr><td colspan="2"></td><td></td><td></td></tr>
</table>

| | | EUROPEAN SEARCH REPORT | Application Number |
|---|---|---|---|
| | | | EP 23 22 0193 |

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/257489 A1 (BURYAK ANDREY [AT] ET AL) 17 August 2023 (2023-08-17) * tables 1,2 * * claim 1 * * paragraphs [0001], [0002], [0183] - [0191] * | 1-15 | INV.<br>C08L23/06<br>C08L23/08<br>C08F2/00<br>C08F110/02<br>F16L9/12 |
| X | EP 4 105 248 A1 (SABIC GLOBAL TECHNOLOGIES BV [NL]) 21 December 2022 (2022-12-21)<br><br>* examples IE1,IE2; tables 1,2 * * claim 1 * * paragraphs [0001], [0002], [0067] - [0073] * | 1-6, 8-11,13, 14 | |
| X | EP 1 655 333 B1 (BOREALIS TECH OY [FI]) 5 September 2007 (2007-09-05) * example 1; table 1 * * claim 1 * * paragraphs [0001], [0081] * | 1-15 | |

**TECHNICAL FIELDS SEARCHED (IPC)**

C08L
C08F
F16L

The present search report has been drawn up for all claims

| Place of search | Date of completion of the search | Examiner |
|---|---|---|
| Munich | 15 May 2024 | van Bergen, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 22 0193

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2024

| Patent document cited in search report | | | Publication date | Patent family member(s) | | | Publication date |
|---|---|---|---|---|---|---|---|
| US 2023257489 | A1 | | 17-08-2023 | AU | 2021303475 | A1 | 09-03-2023 |
| | | | | BR | 112023000496 | A2 | 31-01-2023 |
| | | | | CA | 3188493 | A1 | 13-01-2022 |
| | | | | CN | 115777002 | A | 10-03-2023 |
| | | | | EP | 4179020 | A1 | 17-05-2023 |
| | | | | KR | 20230035655 | A | 14-03-2023 |
| | | | | US | 2023257489 | A1 | 17-08-2023 |
| | | | | WO | 2022008607 | A1 | 13-01-2022 |
| EP 4105248 | A1 | | 21-12-2022 | CN | 117500852 | A | 02-02-2024 |
| | | | | EP | 4105248 | A1 | 21-12-2022 |
| | | | | EP | 4355796 | A1 | 24-04-2024 |
| | | | | WO | 2022263397 | A1 | 22-12-2022 |
| EP 1655333 | B1 | | 05-09-2007 | AR | 051616 | A1 | 24-01-2007 |
| | | | | AT | E372357 | T1 | 15-09-2007 |
| | | | | AU | 2005300735 | A1 | 11-05-2006 |
| | | | | CN | 101044202 | A | 26-09-2007 |
| | | | | DE | 602004008781 | T2 | 12-06-2008 |
| | | | | EA | 200700738 | A1 | 26-10-2007 |
| | | | | EP | 1655333 | A1 | 10-05-2006 |
| | | | | ES | 2291798 | T3 | 01-03-2008 |
| | | | | KR | 20070065387 | A | 22-06-2007 |
| | | | | PT | 1655333 | E | 11-12-2007 |
| | | | | SA | 06270019 | B1 | 22-12-2009 |
| | | | | US | 2009203848 | A1 | 13-08-2009 |
| | | | | WO | 2006048250 | A1 | 11-05-2006 |

EPO FORM P0459

For more details about this annex : see Official Journal of the European Patent Office, No. 12/82

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- US 4933149 A
- EP 684871 A
- WO 2005087261 A
- US 4578879 A
- EP 600414 A
- EP 721798 A
- US 4543399 A

- EP 699213 A
- WO 9425495 A
- EP 696293 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 9619503 A
- WO 9632420 A
- WO 2006063771 A
- EP 428054 A

## Non-patent literature cited in the description

- **GELDART** ; **BAYENS**. The Design of Distributors for Gas-fluidised Beds. *Powder Technology*, 1985, vol. 42
- **GELDART**. Gas Fluidisation Technology. J. Wiley & Sons, 1996
- **HANS ZWEIFEL**. Plastic Additives Handbook. 2009, 1141-1190
- **SCHEIRS** ; **BÖHM** ; **BOOT** ; **LEEVERS**. PE100 Resins for Pipe Applications. *TRIP*, 1996, vol. 4 (12), 408-415
- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813

- **FILIP, X.** ; **TRIPON, C.** ; **FILIP, C.** *J. Mag. Reson*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45, S1, S198
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **ZHOU, Z.** ; **MUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **J. RANDALL**. *Macromol. Sci., Rev. Macromol. Chem. Phys.*, 1989, vol. C29, 201